# EUROPEAN PATENT APPLICATION

(11) **EP 2 184 457 A1**
(43) Date of publication of application: **12.05.2010**
(21) Application number: 08765767.2
(22) Date of filing: 13.06.2008
(51) Int. Cl.: F01N 3/24, B01D 53/94, F01N 3/02, F01N 3/08, F01N 3/28, F01N 3/36, F02D 45/00, B01D 46/42

(54) **EXHAUST PURIFICATION DEVICE FOR INTERNAL COMBUSTION ENGINE**

(30) Priority: 27.07.2007 JP 2007195580
(71) Applicant: Toyota Jidosha Kabushiki Kaisha, Toyota-shi, Aichi 471-8571 (JP)
(72) Inventor: UEDA, Takanori, Toyota-shi Aichi 471-8571 (JP); HIROTA, Shinya, Toyota-shi Aichi 471-8571 (JP)
(74) Representative: Albutt, Anthony John
(86) International application number: PCT/JP2008/061279
(87) International publication number: WO 2009/016896

(57) **Abstract**

When a filter is regenerated, the temperature of the filter is raised quickly, and overheating of an exhaust gas purification catalyst provided upstream of the filter is prevented. An apparatus is provided with an exhaust passage 2 that forks at a separating portion 11 and joins at a joining portion 12, exhaust gas purification catalysts 31, 32 provided between the separating portion 11 and the joining portion 12, a filter 8 provided downstream of the joining portion 12, reducing agent supply means 51, 52 for supplying reducing agent to the respective exhaust passages at positions upstream of the exhaust gas purification catalysts 31, 32, and control means 41, 42 for controlling the quantity of the exhaust gas passing through the exhaust gas purification catalysts 31, 32. When regeneration of the filter 8 is performed, the reducing agent is supplied by one reducing agent supply means 51, and the quantity of exhaust gas passing through the exhaust gas purification catalyst 31 provided in the exhaust passage 21 to which the reducing agent is supplied is made smaller.

## Description

### TECHNICAL FIELD

The present invention relates to an exhaust gas purification apparatus for an internal combustion engine.

### BACKGROUND ART

There has been known a technology in which an exhaust passage of an internal combustion engine bifurcates into two passages, each of which is provided with an NOx storage reduction catalyst (which will be hereinafter referred to as an "NOx catalyst"), a particulate filter (which will be hereinafter referred to as a "filter") is provided downstream of the position at which the bifurcated exhaust passages joins together, exhaust gas having a rich air-fuel ratio is caused to pass through one NOx catalyst when regeneration of the filter is performed, and exhaust gas having a lean air-fuel ratio is caused to pass through the other NOx catalyst, whereby the temperature of the filter is raised (see, for example, patent document 1 or Japanese Patent No. 3758617).

Thus, heat generated in one NOx catalyst, HC that has not reacted in this NOx catalyst, and oxygen having passed through the other NOx catalyst are supplied to the filter. In consequence, HC and oxygen react over a catalyst provided in the filter to cause a rise in the temperature of the filter. Thus, the filter can be regenerated.

However, if the quantity of supplied HC is increased with a view to supply a sufficient quantity of HC to the filter, the quantity of heat generated in one NOx catalysts becomes large, whereby this NOx catalyst can be overheated. On the other hand, if the quantity of supplied HC is restricted with a view to prevent overheating, the rise in the temperature of the filter can be insufficient or it can take a long time for the filter temperature to rise to a sufficiently high temperature. This leads to deterioration of the fuel economy.

### DISCLOSURE OF THE INVENTION

The present invention has been made in view of the above-described problem and has as an object to provide a technology that enables, in an exhaust gas purification apparatus for an internal combustion engine, to prevent overheating of an exhaust gas purification catalyst provided upstream of a filter while increasing the temperature of the filter quickly when regenerating the filter.

To achieve the above object, an exhaust gas purification apparatus for an internal combustion engine according to the present invention is provided with the following means. Specifically, the exhaust gas purification apparatus according to the present invention comprises:
an exhaust passage that forks, at a separating portion, into a plurality of exhaust passages, which join together at a joining portion downstream of said separating portion;
exhaust gas purification catalysts that are provided respectively in the exhaust passages between said separating portion and the joining portion;
a particulate filter provided in the exhaust passage downstream of said joining portion, said particulate filter supporting a catalyst that has an oxidizing ability or being anteceded by a catalyst that has an oxidizing ability provided upstream thereof;
reducing agent supply means for supplying a reducing agent to the respective exhaust passages at positions downstream of said separating portion and upstream of said exhaust gas purification catalysts;
control means for controlling the quantity of exhaust gas passing through said exhaust gas purification catalysts,
and is **characterized in that** when regeneration of said particulate filter is performed, the reducing agent is supplied from one reducing agent supply means, and the quantity of exhaust gas passing through one exhaust gas purification catalyst provided in the exhaust passage to which the reducing agent is supplied is made smaller than the quantity of exhaust gas passing through other exhaust gas purification catalyst(s).

Thus, the reducing agent is supplied to one exhaust gas purification catalyst by the reducing agent supply means, and consequently the reducing agent reacts in the exhaust gas purification catalyst. This leads to a decrease in the quantity of oxygen in the exhaust gas. In addition, the quantity of the exhaust gas becomes smaller, whereby the space velocity (SV) in the one exhaust gas purification catalyst becomes lower. In this situation, a state in which the reducing agent is too much occurs in the one exhaust gas purification catalyst, while oxygen is insufficient accordingly. In consequence, a portion of the reducing agent supplied to the one exhaust gas purification catalyst flows downstream without reacting in the one exhaust gas purification catalyst. Thus, in one exhaust gas purification catalyst, generation of heat by the reaction of the reducing agent can be made smaller by restricting the quantity of inflowing oxygen, and therefore overheating of this one exhaust gas purification catalyst can be prevented.

The reducing agent that has not reacted in this one exhaust gas purification catalyst flows into the particulate filter. Since the reducing agent is not supplied in the other exhaust passage(s), the exhaust gas flowing out of the other exhaust gas purification catalyst contains a large amount of oxygen. Therefore, oxygen also flows into the particulate filter. Thus, since the reducing agent and oxygen flow into the particulate filter, heat is generated in the catalyst having an oxidizing ability supported on or provided upstream of the particulate filter. Thereby, the temperature of the particulate filter can be raised. Therefore, it is possible to raise the temperature of the particulate filter while suppressing a rise in the temperature of the exhaust gas purification catalyst.

In the present invention, the quantity of exhaust gas passing through said one exhaust gas purification catalyst may be made smaller during the period until the quantity of reducing agent adhering to said one exhaust gas purification catalyst becomes equal to or smaller than a threshold value.

In some cases, reducing agent may adhere to the exhaust gas purification catalyst provided in the exhaust passage to which the reducing agent is supplied. If the quantity of the exhaust gas is changed back to the previous quantity in the state in which a large quantity of reducing agent is adhering to one exhaust gas purification catalyst, the reducing agent and oxygen react immediately in this one exhaust gas purification catalyst, whereby overheating of this one exhaust gas purification catalyst can occur. However, the reducing agent adhering to the exhaust gas purification catalyst evaporates slowly during the time in which the quantity of exhaust gas passing though the exhaust gas purification catalyst is made smaller and, consequently, decreases with the lapse of time. Overheating of the one exhaust gas purification catalyst can be prevented if the quantity of the exhaust gas is increased after the quantity of the reducing agent adhering to the one exhaust gas purification catalyst has decreased. Therefore, the aforementioned threshold value may be set to such a quantity of adhering reducing agent that does not lead to overheating of the one exhaust gas purification catalyst when the quantity of exhaust gas passing through the one exhaust gas purification catalyst is changed back to the previous quantity. The period of time taken for the quantity of the adhering reducing agent to become equal to the quantity that does not lead to overheating of the exhaust gas purification catalyst when the quantity of the exhaust gas is increased may be determined in advance, and this period of time may be set as the time period over which the quantity of exhaust gas passing through said one exhaust gas purification catalyst is made smaller.

In the present invention, said exhaust gas purification catalysts may comprise NOx storage reduction catalysts, and regeneration of said particulate filter may be performed simultaneously with reduction of NOx stored in said one exhaust gas purification catalyst.

The NOx storage reduction catalyst has the function of storing NOx in the exhaust gas when the oxygen concentration in the exhaust gas flowing into it is high and reducing NOx stored in it when the oxygen concentration in the exhaust gas flowing into it is low and a reducing agent is present. Therefore, NOx stored in one NOx storage reduction catalyst can be reduced by supplying the reducing agent to this one NOx storage reduction catalyst. Reduction of NOx and regeneration of the filter can be performed simultaneously by performing regeneration of the particulate filter after the quantity of NOx stored in the one NOx storage reduction catalyst has become sufficiently large. Thus, the amount of consumption of the reducing agent can be reduced.

In the present invention, the quantity of exhaust gas passing through said one exhaust gas purification catalyst may be made smaller so that the quantity of oxygen in the ambient atmosphere in said one exhaust gas purification catalyst becomes equal to or smaller than a specific value.

If the quantity of oxygen flowing into one exhaust gas purification catalyst is restricted, the quantity of reducing agent reacting in this one exhaust gas purification catalyst is limited no matter how much reducing agent is supplied, and consequently the temperature of this one exhaust gas purification catalyst will not rise. In other words, overheating of this one exhaust gas purification catalyst can be prevented by limiting the quantity of oxygen flowing into this one exhaust gas purification catalyst so that overheating of this one exhaust gas purification catalyst will not occur. Therefore, said specific value may be set to a quantity of oxygen that enables to prevent overheating of one exhaust gas purification catalyst irrespective of the quantity of the supplied reducing agent.

In the present invention, said control means may comprise control valves that are provided respectively in the exhaust passages between the separating portion and the joining portion to control the channel section areas of the exhaust passages, the quantity of exhaust gas passing through said exhaust gas purification catalyst may be made smaller by operating said control valve in a closing direction, and supply of reducing agent by said one reducing agent supply means may be started during a period since the control valve starts to be closed until it is fully closed.

If the reducing agent is supplied to the exhaust gas by one reducing agent supply means after the quantity of exhaust gas passing through one exhaust gas purification catalyst has been made smaller, it takes a significant time for the reducing agent to reach this one exhaust gas purification catalyst. Consequently, the time taken by regeneration of the particulate filter becomes long. In contrast, if the quantity of exhaust gas passing through one exhaust gas purification catalyst is made smaller when the reducing agent reaches this one exhaust gas purification catalyst, regeneration of the particulate filter can be performed quickly. Furthermore, by supplying the reducing agent by said one reducing agent supply means during the period since the control valve starts to be closed until it is fully closed, the time taken until the reducing agent reaches the one exhaust gas purification catalyst can be reduced, and the quantity of oxygen at the time when the reducing agent reaches the one exhaust gas purification catalyst can be made smaller. Thus, it is possible to perform regeneration of the particulate filter quickly while preventing overheating of the one exhaust gas purification catalyst.

In the present invention, supply of reducing agent by said reducing agent supply means may be performed in multiple installments at regular intervals, and the quantity of supplied reducing agent in each installment may be equal to or smaller than a specific quantity.

By performing supply of reducing agent in multiple installments at regular intervals while making the quantity of the reducing agent supplied in each separate supply as small as possible, evaporation of the reducing agent can be promoted. Thus, the quantity of the reducing agent that adheres to the one exhaust gas purification catalyst in the liquid state becomes smaller. In other words, the quantity of the reducing agent that passes through the one exhaust gas purification catalyst without adhering thereto becomes larger. In addition, with the decrease in the quantity of the reducing agent that adheres to the one exhaust gas purification catalyst, the quantity of reducing agent that reacts when the quantity of exhaust gas passing through the one exhaust gas purification catalyst increases can be decreased. Thus, overheating of the one exhaust gas purification catalyst can be prevented.

In the present invention, a process of supplying the reducing agent by said reducing agent supply means and making the quantity of exhaust gas passing through the exhaust gas purification catalyst to which the reducing agent is supplied smaller than the quantity of exhaust gas passing through other exhaust gas purification catalyst(s) may be performed in the plurality of exhaust passages in rotation.

With supply of reducing agent, heat deterioration of the exhaust gas purification catalyst progresses. In this connection, by supplying the reducing agent to the exhaust gas purification catalysts in rotation on the catalyst-by-catalyst basis to regenerate the particulate filter, the degrees of heat deterioration of the respective exhaust gas purification catalysts can be made substantially uniform among the particulate filters. Thus, the purification ability of the entire system can be maintained at a higher level.

In the present invention, said one reducing agent supply means may supply the reducing agent at such a position that even if the reducing agent, when supplied, evaporates to thereby flow back in the exhaust passage, it does not reach the exhaust passage(s) in which other exhaust gas purification catalyst(s) is provided.

When the reducing agent is supplied to the exhaust gas, a portion of the reducing agent evaporates due to heat of the exhaust gas, whereby the volume of the reducing agent increases. Since the quantity of exhaust gas passing through the exhaust gas purification catalyst is made smaller at that time, the expanding reducing agent may flow back in the exhaust passage. If the expanding reducing agent reaches the separating portion, the reducing agent will flow into the exhaust passage(s) in which the other exhaust gas purification catalyst(s) is provided. Since the quantity of oxygen passing through the other exhaust gas purification catalyst(s) is large because the quantity of exhaust gas passing therethrough is not made smaller, the reducing agent flowing therein will react. In consequence, the quantity of the reducing agent that reaches the particulate filter becomes smaller, and the time taken by regeneration of the particulate filter becomes longer.

In view of this, the distance between the position at which the reducing agent is supplied by the one reducing agent supply means and the separating portion may be designed to be sufficiently long so that the reducing agent supplied by this one reducing agent supply means does not reach the exhaust passage(s) in which the other exhaust gas purification catalyst(s) is provided. Thus, the reducing agent can be prevented from passing through the other exhaust gas purification catalyst(s).

In the present invention, members on which the reducing agent supplied into the exhaust passages by said reducing agent supply means strikes may be provided in the respective exhaust passages.

By causing the reducing agent to strike on a member, evaporation of the reducing agent can be promoted. This member may be heated by a heater or the like. To prevent the reducing agent from adhering to this member, the member may be made of a metal material.

In the present invention, the apparatus may be provided with an air-fuel ratio sensor that senses the air-fuel ratio of the exhaust gas flowing in the exhaust passage downstream of said exhaust gas purification catalyst and upstream of said joining portion, a temperature sensor that senses the temperature of the exhaust gas flowing in the exhaust passage downstream of said exhaust gas purification catalyst and upstream of said joining portion, and abnormality determination means that determines that an abnormality occurs in a certain member if a value sensed by either said air-fuel ratio sensor or said temperature sensor falls out of a specific range.

For example, in cases where the attempt of decreasing the quantity of exhaust gas passing through one exhaust gas purification catalyst fails, when the reducing agent is supplied, it reacts in this one exhaust gas purification catalyst immediately, and overheating of this one exhaust gas purification catalyst can occur consequently. In such cases, the air-fuel ratio sensed by the air-fuel ratio sensor becomes leaner, and the temperature sensed by the temperature sensor becomes higher. If the values sensed by the sensors deviate from normal values in this way, it may be determined that a certain member is out of order. Thus, said specific range refers to a range of sensed values in the case where all the members are in order.

As described in the foregoing, according to the exhaust gas purification apparatus for an internal combustion engine according to the present invention, it is possible to prevent overheating of an exhaust gas purification catalyst provided upstream of a filter when regenerating the filter while raising the temperature of the filter quickly.

### BRIEF DESCRIPTION OF THE DRAWINGS

Fig. 1 is a diagram showing the general configuration of an internal combustion engine and its exhaust system according to an embodiment.
Fig. 2 is a flow chart showing a flow of fuel addition control in filter regeneration in the embodiment.
Fig. 3 is an enlarged view of the portion around a first fuel addition valve and a second fuel addition valve in a case where distributor plates are provided.

### THE BEST MODE FOR CARRYING OUT THE INVENTION

In the following, a specific embodiment of the exhaust gas purification apparatus for an internal combustion engine according to the present invention will be described with reference to the drawings.

### (Embodiment 1)

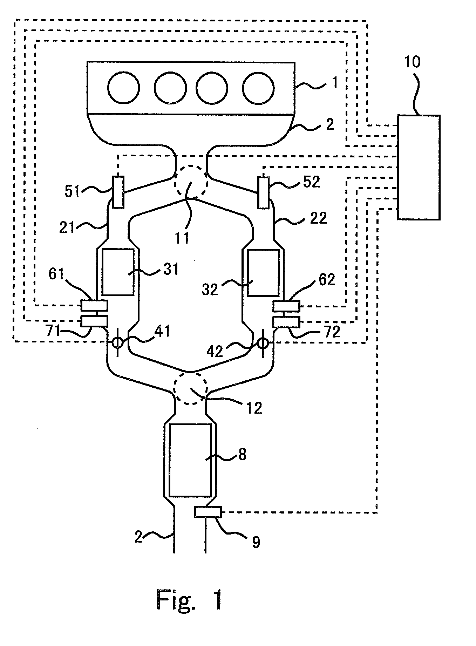

Fig. 1 is a diagram showing the general configuration of an internal combustion engine 1 and its exhaust system according to this embodiment. The internal combustion engine 1 shown in Fig. 1 is a water-cooled four-cycle diesel engine.

The internal combustion engine 1 is connected with an exhaust passage 2 that leads to a combustion chamber. The exhaust passage 2 bifurcates into a first exhaust passage 21 and a second exhaust passage 22 at the separating portion 11, and the first exhaust passage 21 and the second exhaust passage 22 join together at a joining portion 12 downstream of the separating portion 11.

A first NOx storage reduction catalyst 31 (which will be hereinafter referred to as the "first NOx catalyst 31) is provided in the first exhaust passage 21. A second NOx storage reduction catalyst 32 (which will be hereinafter referred to as the "second NOx catalyst 32) is provided in the second exhaust passage 22. The first NOx catalyst 31 and the second NOx catalyst 32 have the function of storing NOx in the exhaust gas when the oxygen concentration in the exhaust gas flowing into them is high and reducing NOx stored therein when the oxygen concentration in the exhaust gas flowing into them is low and a reducing agent is present. In this embodiment, the first NOx catalyst 31 and the second NOx catalyst 32 correspond to the exhaust gas purification catalysts according to the present invention.

A first fuel addition valve 51 that adds fuel (light oil) serving as reducing agent to the exhaust gas flowing in the first exhaust passage 21 is attached to the first exhaust passage 21 downstream of the separating portion 11 and upstream of the first NOx catalyst 31. Furthermore, a second fuel addition valve 52 that adds fuel (light oil) serving as reducing agent to the exhaust gas flowing in the second exhaust passage 22 is attached to the second exhaust passage 22 downstream of the separating portion 11 and upstream of the second NOx catalyst 32. In this embodiment, the first fuel addition valve 51 and the second fuel addition valve 52 correspond to the reducing agent supply means according the present invention.

A first control valve 41 that controls the passage section area of the first exhaust passage 21 is provided in the first exhaust passage 21 downstream of the first NOx catalyst 31 and upstream of the joining portion 12. Furthermore, a second control valve 42 that controls the passage section area of the second exhaust passage 22 is provided in the second exhaust passage 22 downstream of the second NOx catalyst 32 and upstream of the joining portion 12. In this embodiment, the first control valve 41 and the second control valve 42 correspond to the control means according to the present invention.

A first air-fuel ratio sensor 61 that senses the air-fuel ratio of the exhaust gas flowing in the first exhaust passage 21 and a first temperature sensor 71 that senses the temperature of the exhaust gas are attached to the first exhaust passage 21 downstream of the first NOx catalyst 31 and upstream of the first control valve 41. A second air-fuel ratio sensor 62 that senses the air-fuel ratio of the exhaust gas flowing in the second exhaust passage 22 and a second temperature sensor 72 that senses the temperature of the exhaust gas are attached to the second exhaust passage 22 downstream of the second NOx catalyst 32 and upstream of the second control valve 42. In this embodiment, the first air-fuel ratio sensor 61 and the second air-fuel ratio sensor 62 correspond to the air-fuel ratio sensors according to the present invention. In this embodiment, the first temperature sensor 71 and the second temperature sensor 72 correspond to the temperature sensor according to the present invention.

A particulate filter 8 (which will be hereinafter referred to as the filter 8) on which an oxidation catalyst is supported is provided in the exhaust passage 2 downstream of the joining portion 12. The filter 8 traps PM contained in the exhaust gas. An oxidation catalyst may be provided downstream of the joining portion 12 and upstream of the filter 8 instead of the oxidation catalyst supported on the filter 8. Use may be made of another catalyst having an oxidizing ability (e.g. NOx catalyst or three-way catalyst) in place of the oxidation catalyst.

A third temperature sensor 9 that senses the temperature of the exhaust gas flowing in the exhaust passage 2 is attached to the exhaust passage 2 downstream of the filter 8.

To the internal combustion engine 1 having the above-described configuration is annexed an ECU 10, which is an electronic control unit that controls the internal combustion engine 1.

Output signals of the above-mentioned sensors are input to the ECU 10. The ECU 10 is connected with the first fuel addition valve 51, the second fuel addition valve 52, the first control valve 41, and the second control valve 42, which are controlled by the ECU 10.

In this embodiment, when regeneration of the filter 8 is performed, fuel is injected through either the first fuel addition valve 51 or the second fuel addition valve 52. On this occasion, the control valve in the exhaust passage in which the fuel is added is operated in the closing direction. In the following a case where fuel is injected through the first fuel addition valve 51 will be described.

In this case, when regeneration of the filter 8 is performed, fuel is injected through the first fuel addition valve 51, and the first control valve 41 is closed. The first control valve 41 is adapted to leave an aperture that allows flow of the exhaust gas even in the most closed state. In this embodiment, the state in which the first control valve 41 or the second control valve 42 are closed to the fullest extent will be referred to as "fully closed". During filter 8 regeneration, the first control valve 41 may be fully closed.

As fuel injected through the first fuel addition valve 51 flows in the first NOx catalyst 31, the fuel is oxidized by the oxygen in the exhaust gas. However, since the quantity of oxygen supplied into the first NOx catalyst 31 is small due to low exhaust gas flow rate, a portion of the fuel flows out of the first NOx catalyst 31 without being oxidized fully in the first NOx catalyst 31.

Therefore, a decrease in the quantity of fuel reacting in the first NOx catalyst 31 enables suppression of a rise in the temperature of the first NOx catalyst 31. Furthermore, outflow of fuel from the first NOx catalyst 31 can provide supply of fuel to the filter 8. On this occasion, the second control valve 42 is left fully open. Therefore, a large quantity of exhaust gas having a lean air-fuel ratio flows in the second exhaust passage 22. The exhaust gas having a lean air-fuel ratio passes through the second exhaust passage 22 and flowing into the filter 8 located downstream.

Then, fuel flowing out of the first NOx catalyst 31 and oxygen having passed through the second NOx catalyst 32 react in the oxidation catalyst supported on the filter 8, and consequently the temperature of the filter 8 is raised by reaction heat generated thereby. Thus, regeneration of the filter 8 can be achieved.

The quantity of fuel added through the first fuel addition valve 51 is controlled in such a way that the exhaust gas passing through the first NOx catalyst 31 has a rich air-fuel ratio. In this case, a feedback control may be performed so that the air-fuel ratio sensed by the first air-fuel ratio sensor 61 becomes a specific rich air-fuel ratio. Alternatively, the quantity of fuel added through the first fuel addition valve 51 may be controlled in such a way that the temperature of the filter 8 becomes equal to a temperature that is required to regenerate the filter 8. In this case, a feedback control may be performed so that the temperature sensed by the third temperature sensor 9 becomes equal to a specific temperature.

In this way, it is possible to perform regeneration of the filter 8 while preventing overheating of the first NOx catalyst 31 and the second NOx catalyst 32. The first control valve 41 and the second control valve 42 are kept fully open during the period other than the period during which regeneration of the filter 8, reduction of NOx, or SOx poisoning recovery is performed.

In this embodiment, regeneration of the filter 8 may be performed according to the following processes (1) to (4) in order:
(1) The ECU 10 outputs a signal for causing the first control valve 41 to be fully closed;
(2) The ECU 10 outputs a signal for causing the first fuel injection valve 51 to inject fuel;
(3) Injection of fuel through the first fuel addition valve 51 is stopped, and the first control valve 41 is kept fully closed for a specific period of time; and
(4) The first control valve 41 is fully opened.

When fuel is injected through the first fuel addition valve 51, a portion of the fuel adheres to the first NOx catalyst 31. If the first control valve 41 is caused to be fully opened at a time when there is a significant quantity of fuel adhering to the first NOx catalyst 31, the fuel adhering to the first NOx catalyst 31 may react with oxygen, whereby the first NOx catalyst 31 can be overheated. In view of this, in the above step (3), the first control valve 41 is not opened immediately after the stoppage of addition of fuel but opened after the lapse of a specific period of time. Specifically, the control valve 41 is opened after the fuel adhering to the first NOx catalyst 31 has been oxidized at a low SV.

The timing of opening the first control valve 41 may be determined by, for example, estimating the quantity of fuel adhering to the first NOx catalyst 31, and the first control valve 41 may be opened at a time until which the quantity of fuel decreases to be equal to or smaller than a quantity (i.e. threshold value) that will not leads to overheating of the first NOx catalyst 31.

Next, a flow of a fuel addition control in the regeneration of the filter 8 in this embodiment will be described.

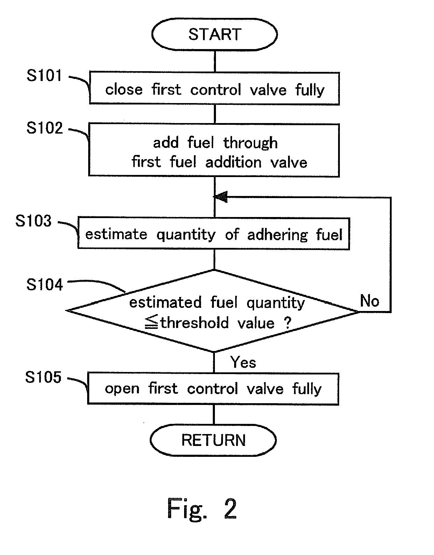

Fig. 2 is a flow chart showing the flow of the fuel addition control in regenerating the filter 8 in this embodiment.

In step S101, the first control valve 41 is fully closed.

In step S102, fuel is added through the first fuel addition valve 51.

In step S103, the quantity of fuel adhering to the first NOx catalyst 31 is estimated.

In step S104, a determination is made as to whether or not the quantity of fuel estimated in step S103 is equal to or smaller than a threshold value. If the determination in step S104 is affirmative, the process proceeds to step S105. On the other hand, if the determination is negative, the process returns to step S103.

In step S105, the first control valve 41 is fully opened.

By the above process, fuel and oxygen can be supplied to the filter 8 while preventing overheating of the first NOx catalyst 31. In the next process, the second control valve 42 is fully closed, and fuel is added through the second fuel addition valve 52.

The signal mentioned in the above-described step (1) may be output upon reducing NOx stored in the first NOx catalyst 31. For example, regeneration of the filter 8 may be performed at a time at which it is presumed that the amount of NOx stored in the first NOx catalyst 31 is not smaller than a specific amount. This specific amount, or an amount that requires reduction of NOx, is determined in advance by, for example, experiments. When fuel is added through the first fuel addition valve 51 to regenerate the filter 8, the air-fuel ratio of the exhaust gas flowing into the first NOx catalyst 31 becomes rich, and consequently NOx stored in the first NOx catalyst 31 is reduced. Thus, reduction of NOx and regeneration of the filter 8 can be performed simultaneously, whereby deterioration of the fuel economy can be suppressed.

The aperture left between the first control valve 41 and the first exhaust passage 21 in the state in which the first control valve 41 is fully closed may be determined in the following manner. That is, the aperture is designed to allow flow of a certain quantity of the exhaust gas that does not lead to overheating of the first NOx catalyst 31 no matter how large the quantity of fuel added through the first fuel addition valve 51 is. In other words, since whether overheating of the first NOx catalyst 31 occurs or not depends on the quantity of oxygen remaining in the first NOx catalyst 31, the aforementioned aperture is designed to fall within the range of apertures that do not lead to overheating of the NOx catalyst 31. The aforementioned aperture may be determined in such a way that the quantity of the exhaust gas flowing into the first NOx catalyst 31 becomes 1% to 3% of the maximum quantity of the exhaust gas in the operation range in which regeneration of the filter 8 is performed. Alternatively, the aperture may be determined in such a way that the quantity of the exhaust gas passing through the first control valve 41 becomes equal to that in the state in which the first control valve 41 is fully closed. Still alternatively, the degree of opening may be equal to that in the state in which the first control valve 41 is fully closed.

The signal mentioned in the above-described step (2) may be output before the first control valve 41 is fully closed. In other words, fuel may be injected through the first fuel addition valve 51 during the period from the time at which the signal for causing the first control valve 41 to be fully closed is output to the time at which it is actually closed fully. If fuel injected through the first fuel addition valve 51 flows into the first NOx catalyst 31 and thereafter the first control valve 41 is fully closed after the lapse of a certain period of time, fuel reacts in the first NOx catalyst 31 rapidly, and therefore overheating of the first NOx catalyst 31 can occur. On the other hand, if the first control valve 41 is fully closed before fuel is injected through the first fuel addition valve 51, it takes a significant time for the fuel injected through the first fuel addition valve 51 to reach the first NOx catalyst 31, and it is difficult to regenerate the filter 8 quickly. Therefore, by closing the first control valve 41 fully at the time when the fuel injected through the first fuel addition valve 51 just reaches the first NOx catalyst 31, it is possible to regenerate the filter 8 quickly while suppressing overheating of the first NOx catalyst 31.

The signal mentioned in the above-described step (2) may cause the first fuel addition valve 51 to inject fuel at regular intervals. In other words, a necessary quantity of fuel may be injected in installments instead of injected at one time. It is preferred that the quantity of injected fuel in each installment be made as small as possible.

This promotes evaporation of the fuel injected through the first fuel addition valve 51, and consequently adhesion of fuel to the first NOx catalyst 31 can be reduced. This means that the evaporated fuel can pass through the first NOx catalyst 31, and therefore a larger quantity of fuel can be supplied to the filter 8. Furthermore, since the quantity of fuel adhering to the first NOx catalyst 31 becomes smaller, a rise in the temperature of the first NOx catalyst 31 can be suppressed at the time when the first control valve 41 is opened later. In this way, the reaction of the fuel injected through the first fuel addition valve 51 is prevented, as much as possible, from occurring in the first NOx catalyst 31, and the fuel is supplied to the filter 8.

In connection with the above, the intervals of fuel injection through the first fuel addition valve 51 may be adjusted so that the air-fuel ratio sensed by the first air-fuel ratio sensor 61 becomes equal to a specific air-fuel ratio. For example, if the air-fuel ratio is to be made higher, the intervals of fuel injection are made longer, and if the air-fuel ratio is to be made lower, the intervals of fuel injection are made shorter. Alternatively, the intervals of fuel injection through the first fuel addition valve 51 may be adjusted so that the temperature sensed by the first temperature sensor 71 becomes equal to a specific temperature. Still alternatively, the intervals of fuel injection through the first fuel addition valve 51 may be adjusted so that the temperature sensed by the third temperature sensor 9 becomes equal to a specific temperature. For example, if the temperature is to be raised, the intervals of fuel injection are made shorter so that the air-fuel ratio becomes richer. If the temperature is to be lowered, the intervals of fuel injection are made longer so that the air-fuel ratio becomes leaner.

Although a description of this embodiment has been made of the case where fuel is added through the first fuel addition valve 51, the case where fuel is added through the second fuel addition valve 52 can be understood in the same manner. Specifically, fuel and oxygen can be supplied to the filter 8 by fully opening the first control valve 41 and injecting fuel through the second fuel addition valve 52 while closing the second control valve 42.

When regenerating the filter 8, fuel may be injected alternately through the first fuel addition valve 51 and the second fuel addition valve 52. Specifically, first, the fuel is injected through the first fuel addition valve 51 while closing the first control valve 41, and the second control valve 42 is fully opened. Secondly, the first control valve 41 is fully opened, and fuel is injected through the second fuel addition valve 52 while closing the second control valve 42. By executing these operations repeatedly, fuel and oxygen can be supplied to the filter 8. Then, the temperature of the first NOx catalyst 31 and the temperature of the second NOx catalyst 32 will rise alternately, and therefore overheating of the first NOx catalyst 31 and the second NOx catalyst 32 can be prevented.

In cases where the temperature of the filter 8 has become lower than temperatures at which PM can be oxidized due to, for example, a decrease in the temperature of the exhaust gas discharged from the internal combustion engine 1, the first control valve 41 or the second control valve 42, whichever is fully closed, may be left fully closed. Then, only a small quantity of low temperature exhaust gas passes through the fully closed control valve, and therefore a decrease in the temperature of the NOx catalyst provided upstream of this control valve can be prevented. When the temperature of the exhaust gas discharged from the internal combustion engine 1 rises afterward and regeneration of the filter 8 becomes possible, fuel is added through the fuel addition valve provided upstream of the control valve that is fully closed.

For example, when the load of the internal combustion engine 1 becomes very low during regeneration of the filter 8, or when the internal combustion engine starts to idle, the temperature of the exhaust gas falls to make regeneration of the filter 8 difficult. In this situation, if the control valve in the exhaust passage in which the addition of fuel is performed is opened, heat in the NOx catalyst is carried away by the exhaust gas, which leads to a decrease in the temperature of the NOX catalyst. Then, a large quantity of fuel is needed to raise the temperature again, which leads to deterioration of the fuel economy. On the other hand, if the control valve is maintained to be fully closed when the temperature of the exhaust gas becomes low during regeneration of the filter 8, the temperature of the NOx catalyst can be maintained high. Therefore, regeneration of the filter 8 can be restarted promptly when the temperature of the exhaust gas becomes high afterward. Furthermore, the progress of heat deterioration of the first NOx catalyst 31 and the second NOx catalyst 32 can be suppressed.

On the other hand, when it becomes impossible to regenerate the filter 8 due to, for example, a rise in the temperature of the exhaust gas discharged from the internal combustion engine 1 and/or an increase in the quantity of the exhaust gas, the first control valve 41 and the second control valve 42 may be fully opened. Thereby, an increase in the pressure loss caused by keeping a control valve(s) closed can be prevented from occurring. If the temperature of the exhaust gas decreases and/or the quantity of the exhaust gas decreases afterward, the control valve that had been fully closed previously is fully closed again and the addition of fuel is restarted. In this way, the progress of heat deterioration of the first NOx catalyst 31 and the second NOx catalyst 32 can be suppressed.

The positions at which the first fuel addition valve 51 and the second fuel addition valve 52 are provided may be arranged in such a way that fuel added through one fuel addition valve does not flow into the exhaust passage in which the other fuel addition valve is provided. If fuel is added through the fuel addition valve at a time when the control valve is closed, the fuel may flow back upstream as the fuel evaporates and expands in some cases, because the downstream flow of the exhaust gas is restricted. In the other exhaust passage, a large quantity of exhaust gas having a lean air-fuel ratio is flowing, and the fuel reacts in the NOx catalyst. Thus, the quantity of fuel delivered to the filter 8 becomes smaller. Therefore, a larger quantity of fuel is needed to regenerate the filter 8, which leads to deterioration of the fuel economy. In contrast, if the distance from the fuel addition valve to the separating portion 11 is sufficiently long, the backflow of fuel can be prevented from entering the other exhaust passage.

For example, the position at which the first fuel addition valve 51 is provided is determined taking into consideration the flow rate of the exhaust gas in the state in which the first control valve 41 is fully closed, the quantity of added fuel, and the temperature of the ambient atmosphere. The velocity of fuel that flows back in the first exhaust passage 21 as it expands varies depending on the flow rate of the exhaust gas, the quantity of added fuel, and the temperature of the ambient atmosphere. The position at which the first fuel addition valve 51 is provided is determined in such a way that the most upstream position to which the backflow of fuel reaches is located downstream of the separating portion 11. The position at which the second fuel addition valve 52 is provided is also determined in the same manner.

However, since it is preferred that the distance from the first fuel addition valve 51 and the second fuel addition valve 52 to the separating portion 11 be short, the quantity of fuel injected in each installment of fuel addition is made as small as possible. Specifically, the quantity of fuel injected through the first fuel addition valve 51 and the second fuel addition valve 52 may be the minimum quantity that the first fuel addition valve 51 and the second fuel addition valve 52 can inject.

The first NOx catalyst 31 and the second NOx catalyst 32 may be disposed beside the internal combustion engine 1, and the filter 8 may be disposed under the floor of the vehicle. Disposing the first NOx catalyst 31 and the second NOx catalyst 32 beside the internal combustion engine 1 facilitates maintaining the temperatures of the NOx catalysts high and enables reduction of NOx at higher efficiency. Disposing the filter 8 under the floor near the NOx catalysts facilitates the installation of the first control valve 41 and the second control valve 42 and allows an increase in the capacity of the filter 8.

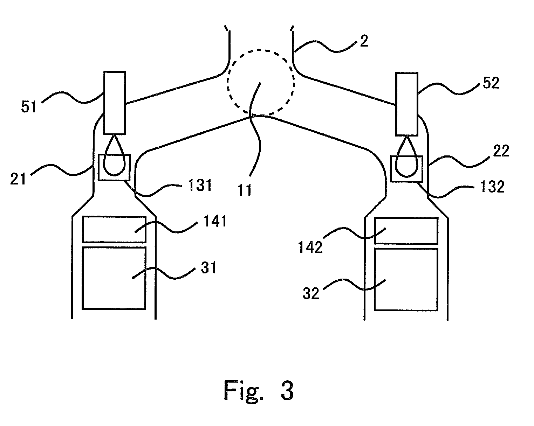

To promote evaporation of fuel injected through the first fuel addition valve 51 and the second fuel addition valve 52, distributor plates may be provided in the fuel atomizing regions. Fig. 3 is an enlarged view of the portion around the first fuel addition valve 51 and the second fuel addition valve 52 in a case where distributor plates are provided. A first distributor plate 131 is provided in the atomizing region of the fuel injected through the first fuel addition valve 51, and a second distributor plate 132 is provided in the atomizing region of the fuel injected through the second fuel addition valve 52. The material of the first distributor plate 131 and the second distributor plate 132 may be a metal, whereby adhesion of a large quantity of fuel to the first distributor plate 131 and the second distributor plate 132 can be prevented. Furthermore, since the temperatures of the first distributor plate 131 and the second distributor plate 132 become high due to heat of the exhaust gas, evaporation of fuel is promoted as fuel adheres to the first distributor plate 131 and the second distributor plate 132.

A first electric heater 141 may be provided between the first fuel addition valve 51 and the first NOx catalyst 31, and a second electric heater 142 may be provided between the second fuel addition valve 52 and the second NOx catalyst 32. The first electric heater 141 and the second electric heater 142 may be replaced by other heating devices. Thus, evaporation of fuel can be promoted by heating fuel added to the exhaust gas by means of electric heaters or the like. In this embodiment, the first distributor plate 131 and the second distributor plate 132 correspond to the "member on which the reducing agent strikes" according to the present invention.

Abnormalities of the system can be determined based on an output signal of a first air-fuel ratio sensor 61, a first temperature sensor 71, a second air-fuel ratio sensor 62, or a second temperature sensor 72.

For example, if the first control valve 41 is out of order and cannot be fully closed, overheating of the first NOx catalyst 31 can occur due to inflowing of fuel and oxygen into the first NOx catalyst 31. In this case, the air-fuel ratio sensed by the first air-fuel ratio sensor 61 becomes higher (i.e. leaner) than expected values. In addition, the temperature sensed by the first temperature sensor 71 becomes higher than expected values. Therefore, if the air-fuel ratio and the temperature of the exhaust gas fall within an expected range, it may be determined that the system is in order. Alternatively, sensors that sense the degrees of opening of the first control valve 41 and the second control valve 42 may be provided, and abnormalities may be determined by directly sensing the degrees of opening of the first control valve 41 and the second control valve 42. In this embodiment, the ECU 10 that determines abnormalities in this way corresponds to the abnormality determination means according to the present invention.

## Claims

1. An exhaust gas purification apparatus for an internal combustion engine comprising:
an exhaust passage that forks, at a separating portion, into a plurality of exhaust passages, which join together at a joining portion downstream of said separating portion;
exhaust gas purification catalysts that are provided respectively in the exhaust passages between said separating portion and the joining portion;
a particulate filter provided in the exhaust passage downstream of said joining portion, said particulate filter supporting a catalyst that has an oxidizing ability or being anteceded by a catalyst that has an oxidizing ability provided upstream thereof;
reducing agent supply means for supplying a reducing agent to the respective exhaust passages at positions downstream of said separating portion and upstream of said exhaust gas purification catalysts;
control means for controlling the quantity of exhaust gas passing through said exhaust gas purification catalysts,
**characterized in that** when regeneration of said particulate filter is performed, the reducing agent is supplied from one reducing agent supply means, and the quantity of exhaust gas passing through one exhaust gas purification catalyst provided in the exhaust passage to which the reducing agent is supplied is made smaller than the quantity of exhaust gas passing through other exhaust gas purification catalyst(s).

2. An exhaust gas purification apparatus for an internal combustion engine according to claim 1, **characterized in that** the quantity of exhaust gas passing through said one exhaust gas purification catalyst is made smaller until the quantity of reducing agent adhering to said one exhaust gas purification catalyst becomes equal to or smaller than a threshold value.

3. An exhaust gas purification apparatus for an internal combustion engine according to claim 1 or 2, **characterized in that** said exhaust gas purification catalysts comprise NOx storage reduction catalysts, and regeneration of said particulate filter is performed simultaneously with reduction of NOx stored in said one exhaust gas purification catalyst.

4. An exhaust gas purification apparatus for an internal combustion engine according to claim 1 or 2, **characterized in that** the quantity of exhaust gas passing through said one exhaust gas purification catalyst is made smaller so that the quantity of oxygen in the ambient atmosphere in said one exhaust gas purification catalyst becomes equal to or smaller than a specific value.

5. An exhaust gas purification apparatus for an internal combustion engine according to claim 1 or 2, **characterized in that** said control means comprises control valves that are provided respectively in the exhaust passages between the separating portion and the joining portion to control channel section areas of the exhaust passages, the quantity of exhaust gas passing through said exhaust gas purification catalyst is made smaller by operating said control valve in a closing direction, and supply of reducing agent by said one reducing agent supply means is started during a period since the control valve starts to be closed until it is fully closed.

6. An exhaust gas purification apparatus for an internal combustion engine according to claim 1 or 2, **characterized in that** supply of reducing agent by the reducing agent supply means is performed in multiple installments at regular intervals, and the quantity of supplied reducing agent in each installment is not larger than a specific quantity.

7. An exhaust gas purification apparatus for an internal combustion engine according to claim 1 or 2, **characterized in that** a process of supplying the reducing agent by said reducing agent supply means and making the quantity of exhaust gas passing through the exhaust gas purification catalyst to which the reducing agent is supplied smaller than the quantity of exhaust gas passing through other exhaust gas purification catalyst(s) is performed in the plurality of exhaust passages in rotation.

8. An exhaust gas purification apparatus for an internal combustion engine according to claim 1 or 2, **characterized in that** said one reducing agent supply means supplies the reducing agent at such a position that even if the reducing agent, when supplied, evaporates to thereby flow back in the exhaust passage, it does not reach the exhaust passage(s) in which other exhaust gas purification catalyst(s) is provided.

9. An exhaust gas purification apparatus for an internal combustion engine according to claim 1 or 2, members on which the reducing agent supplied into the exhaust passages by said reducing agent supply means strikes are provided in the respective exhaust passages.

10. An exhaust gas purification apparatus for an internal combustion engine according to claim 1 or 2 **characterized by** comprising:
an air-fuel ratio sensor that senses the air-fuel ratio of exhaust gas flowing in the exhaust passage downstream of said exhaust gas purification catalyst and upstream of said joining portion;
a temperature sensor that senses the temperature of exhaust gas flowing in the exhaust passage downstream of said exhaust gas purification catalyst and upstream of said joining portion; and
abnormality determination means that determines that an abnormality occurs in a certain member if a value sensed by either said air-fuel ratio sensor or said temperature sensor falls out of a specific range.
